**Europäisches Patentamt**

**European Patent Office**

**Office européen des brevets**

(19)

(11) Numéro de publication : **0 365 062 B1**

(12)

# FASCICULE DE BREVET EUROPEEN

(45) Date de publication du fascicule du brevet :
**13.01.93 Bulletin 93/02**

(51) Int. Cl.⁵ : **G01L 1/24,** G08B 13/18, G01B 13/10, G01M 11/00

(21) Numéro de dépôt : **89202375.5**

(22) Date de dépôt : **21.09.89**

(54) **Capteur de pression à fibre optique.**

(30) Priorité : **27.09.88 FR 8812596**

(43) Date de publication de la demande :
**25.04.90 Bulletin 90/17**

(45) Mention de la délivrance du brevet :
**13.01.93 Bulletin 93/02**

(84) Etats contractants désignés :
**CH DE FR GB IT LI**

(56) Documents cités :
**EP-A- 0 120 999
EP-A- 0 190 922
DE-A- 3 628 083
DE-A- 3 701 632
DE-C- 2 810 971
GB-A- 2 141 821
GB-A- 2 186 683
US-A- 4 488 040
OPTICS LETTERS, vol. 12, no. 2, février 1987,
pages 126-128, New York, NY, USA ; F. MAYS-
TRE et al : "Zero-birefringenceoptical-fiber
holder".**

(73) Titulaire : **LABORATOIRES D'ELECTRONIQUE PHILIPS
3, Avenue Descartes
F-94450 Limeil-Brévannes (FR)**
(84) **FR**
Titulaire : **N.V. Philips' Gloeilampenfabrieken
Groenewoudseweg 1
NL-5621 BA Eindhoven (NL)**
(84) **CH DE GB IT LI**

(72) Inventeur : **Hazan, Jean-Pierre Société Civile
S.P.I.D.
156, Boulevard Haussmann
F-75008 Paris (FR)**
Inventeur : **Steers, Michel Société Civile
S.P.I.D.
156, Boulevard Haussmann
F-75008 Paris (FR)**
Inventeur : **Delmas, Gilles Société Civile
S.P.I.D.
156, Boulevard Haussmann
F-75008 Paris (FR)**
Inventeur : **Nagel, Jean-Louis Société Civile
S.P.I.D.
156, Boulevard Haussmann
F-75008 Paris (FR)**

(74) Mandataire : **Landousy, Christian et al
Société Civile S.P.I.D. 156, Boulevard
Haussmann
F-75008 Paris (FR)**

## Description

L'invention concerne un capteur de pression à fibre optique formant un câble, la fibre optique étant soumise à une action d'un organe presseur qui subit des forces de pression, l'organe presseur présentant une structure répétitive longitudinalement permettant au câble de pouvoir être enroulé sur lui-même autour d'un axe de rotation, et, lorsqu'il est déroulé de pouvoir être courbé dans une direction sensiblement parallèle à cet axe de rotation.

Un capteur de pression à fibre optique formant un câble est connu du document GB 2 186 683 qui décrit un détecteur d'intrus à fibres optiques permettant de situer un intrus sur une surface protégée.
Il utilise pour cela deux chemins à fibres optiques, un premier chemin disposé pour détecter les forces de pression appliquées par l'intrus, et un second chemin disposé en dessous à l'écart desdites forces. Des fibres optiques passent de l'un à l'autre des chemins de sorte que pour un endroit de la surface protégée, les fibres optiques situées dans le premier chemin détectent une perturbation alors que celles situées dans le second chemin ne détectent rien. En intervenant sur le nombre et l'alternance des fibres optiques entre les chemins, il est possible d'opérer un codage qui permet de situer l'intrus sur la surface protégée. Il s'agit ici d'un problème de repérage. Les deux chemins doivent être isolés l'un de l'autre pour ne pas détecter simultanément les mêmes perturbations et néanmoins sont reliés par l'ensemble du faisceau de fibres optiques. Il s'agit donc d'une structure fragile difficile à mettre en oeuvre. D'autre part le problème de la sensibilité de détection n'est pas réellement pris en considération. En particulier le problème qui se pose pour un tel capteur est de pouvoir détecter des forces de pression de faible valeur soit à l'aplomb soit à l'écart de l'aplomb du câble. En effet un capteur doit pouvoir détecter latéralement des forces appliquées pour ne pas devoir superviser une surface protégée par des capteurs trop rapprochés. Les éléments de pression en matière plastique qui constituent le capteur, ne semblent pas bien adaptés pour disposer d'une détectivité élevée et leur forme plane les rend inaptes à s'adapter à certaines courbures pour différentes configurations de positionnement.

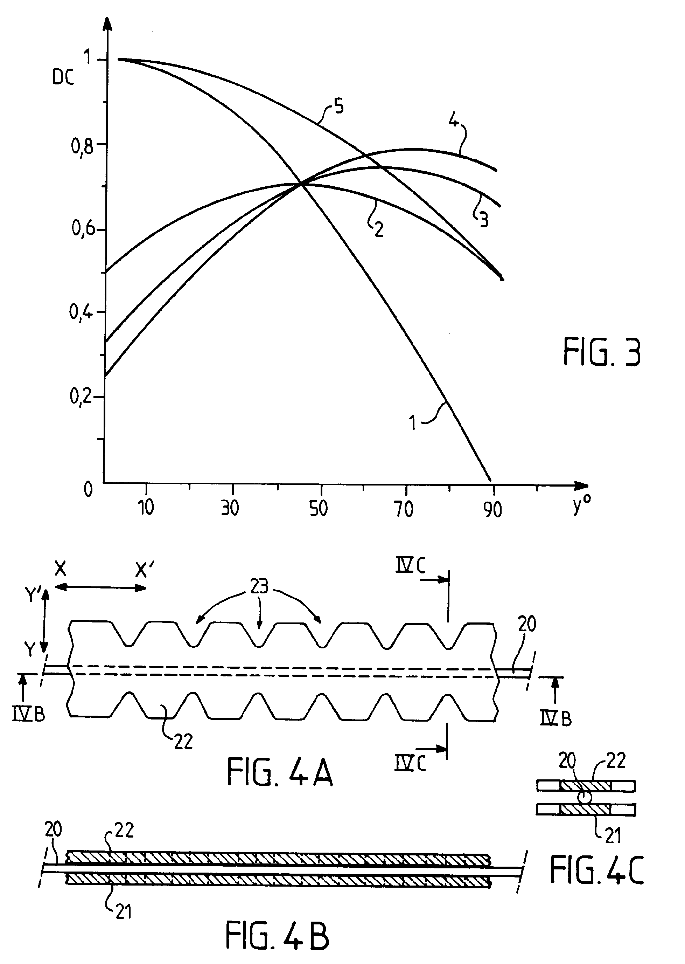

On connait également le document US 4 488 040 qui décrit un capteur à fibre optique du genre décrit dans le premier alinéa. Autour de la fibre optique est enroulé en hélice un fil flexible en matériau relativement dur. Du fait de l'enroulement en hélice, la fibre optique et le fil sont en contact par un nombre limité de points de contact distants les uns des autres comme cela est indiqué sur la figure 3.

Les forces qui agissent sur les crêtes des ondulations agissent sur des surfaces très réduites. Or, un intrus exerce des forces de pression sur une surface considérablement plus étendue. De plus, ces forces de pression sont diffusées latéralement par l'épaisseur du sol situé entre le pied de l'intrus et le câble. Les forces de pression qui peuvent aussi être "captées" par les crêtes des ondulations d'un tel câble sont donc excessivement faibles. La détectivité d'un tel câble est donc très réduite.

D'autre part, la fibre optique est sollicitée en flexion. Le diamètre d'une fibre optique étant au plus de l'ordre de 0,25 mm, on constate que ces points de contact, qui portent chacun sur une très faible surface, génère des courbures. Celles-ci provoquent des changements de l'état de polarisation de la lumière ce qui permet un mécanisme de détection de ces pertes de lumière.

Le problème qui est posé est de réaliser un capteur de pression qui puisse assurer la protection périmétrique d'un site afin de détecter avec une grande sensibilité la présence d'un intrus qui à son insu et par son propre poids agit sur le capteur, celui-ci étant destiné à une large diffusion ce qui implique une facilité de manipulation et d'installation par un personnel peu spécialisé.

La solution à ce problème posé consiste en ce que l'organe presseur est constitué d'une structure d'amont et d'une structure d'aval, rigides ou semi-rigides, placées de part et d'autre de la fibre optique relativement aux forces de pression appliquées, la structure d'amont ayant une largeur d'au moins 1 cm pour récupérer le mieux possible les composantes des forces de pression appliquées à l'écart de l'aplomb du câble.

Ainsi avantageusement, le capteur de pression peut être enroulé autour de bobines, ce qui facilite son transport et son stockage, et il peut facilement être courbé pour s'adapter à des configurations diverses pour son installation. Il a également une grande sensibilité latérale.

La structure d'amont sert à récupérer les composantes de la force de pression appliquée même lorsque la zone d'application n'est pas à l'aplomb du câble et à les transmettre à la fibre optique, et la structure d'aval sert à maintenir la fibre optique en position lorsque le câble est posé au sol. Le capteur opérant en mode périmétrique est donc enroulé et enterré dans le sol à une certaine profondeur. Son action doit porter sur une zone déterminée du sol et pour cela il est disposé en méandres pour avoir une grande efficacité sur une zone latérale étendue et détecter l'intrus sur cette zone de passage éventuel. C'est le poids de l'intrus qui va constituer l'évènement agissant. Ce poids peut ne pas être appliqué à l'aplomb du câble et donc les forces de pression qui parviennent affaiblies et mal orientées en direction du capteur, doivent néanmoins pouvoir être détectées. Lorsqu'une fibre optique nue est enterrée, les forces agissantes sont très faibles. En effet, la pression due au poids appliqué en surface s'atténue d'une part à cause de la dispersion des forces dans le sol, et d'autre part du fait que la fibre optique a une très faible dimension (de l'ordre de 0,1 mm). Ainsi selon la nature de sol et la profondeur de la fibre optique il apparaît une très forte perte de sensibilité qui peut atteindre un facteur 1000 à 15 cm de profondeur.

Par ailleurs, la force agissante n'opérant pas d'une manière linéaire sur la fibre optique en fonction de l'éloignement, il y a lieu de favoriser au maximum la détectivité du câble pour les forces latérales de faibles grandeurs appliquées à une distance éloignée du câble. Pour récupérer une partie de cette perte de sensibilité et favoriser la détectivité latérale, selon l'invention la fibre optique est disposée entre des feuilles de grande dimension latérale par rapport au diamètre de la fibre optique, les feuilles présentant des orientations favorisant la détectivité latérale. Les largeurs de la structure d'amont et d'aval doivent être d'au moins 1 cm environ correspondant à environ 100 fois (respectivement 50 fois) le diamètre de 125 micromètres (respectivement 250 micromètres) du verre d'enrobage.

De plus le câble devant être mis en position par du personnel effectuant des tâches de terrassement le matériel doit être robuste. Selon l'invention l'organe presseur du câble peut présenter une structure continue ou une structure par tronçons.

Selon un premier mode de réalisation les structures d'amont et d'aval sont constituées de deux feuilles continues semi-rigides qui sont munies de moyens de courbure pour que lesdites feuilles puissent être courbées en des zones quelconques de leurs longueurs, dans le plan osculateur à chaque feuille en chaque zone. "Semi-rigides" veut dire que les feuilles sont suffisamment rigides pour transmettre les forces de pression et suffisamment souples pour être enroulables sur elles-mêmes dans leur sens longitudinal.

Selon un deuxième mode de réalisation les structures d'amont et d'aval de l'organe presseur sont organisées en tronçons suffisamment distants pour permettre l'enroulement du câble et sa courbure dans le sens transversal.

Les structures d'amont et d'aval doivent être suffisamment rigides pour ne pas trop se déformer localement sous l'effet du poids de l'intrus et doivent transmettre à la fibre optique l'essentiel de la force récupérée. La dureté du matériau les composant doit être suffisante pour comprimer la fibre optique à travers son gainage de protection. La surface de la structure d'amont doit être suffisante pour permettre une détectivité exploitable.

Les deux structures vont pouvoir présenter différentes caractéristiques destinées en particulier à récupérer les forces latérales de pression et qui sont décrites ci-après selon plusieurs exemples de réalisation.

L'invention sera ainsi mieux comprise à l'aide des figures suivantes données à titres d'exemples non limitatifs qui représentent :

figure 1 : un diagramme de composition des forces.

figure 2 : un diagramme d'application des forces sur un organe presseur demi-cylindrique.

figure 3 : des courbes de sensibilité de détection en fonction de l'écartement du point d'application de la force par rapport à l'axe du câble et ceci pour différentes orientations de l'organe presseur.

figures 4A, 4B, 4C : des vues schématiques de dessus et en coupe d'un câble présentant un organe presseur à structure continue échancrée.

figure 5 : un schéma d'un câble présentant un organe presseur à structure continue en accordéon.

figure 6A, 6B : des schémas de deux câbles présentant un organe presseur continu muni de nervures orientées à 90° ou à 45° des forces appliquées.

figure 7 : un schéma d'un câble présentant un organe presseur organisé en tronçons.

figure 8 : un schéma d'un câble présentant un organe presseur organisé en tronçons orientés alternativement dans deux directions sensiblement orthogonales.

figures 9A, 9B : deux schémas représentant deux moyens pour solidariser entre elles les structures d'amont et d'aval.

figure 10 : un schéma du placement du câble en relation avec les moyens optiques de détection de la lumière.

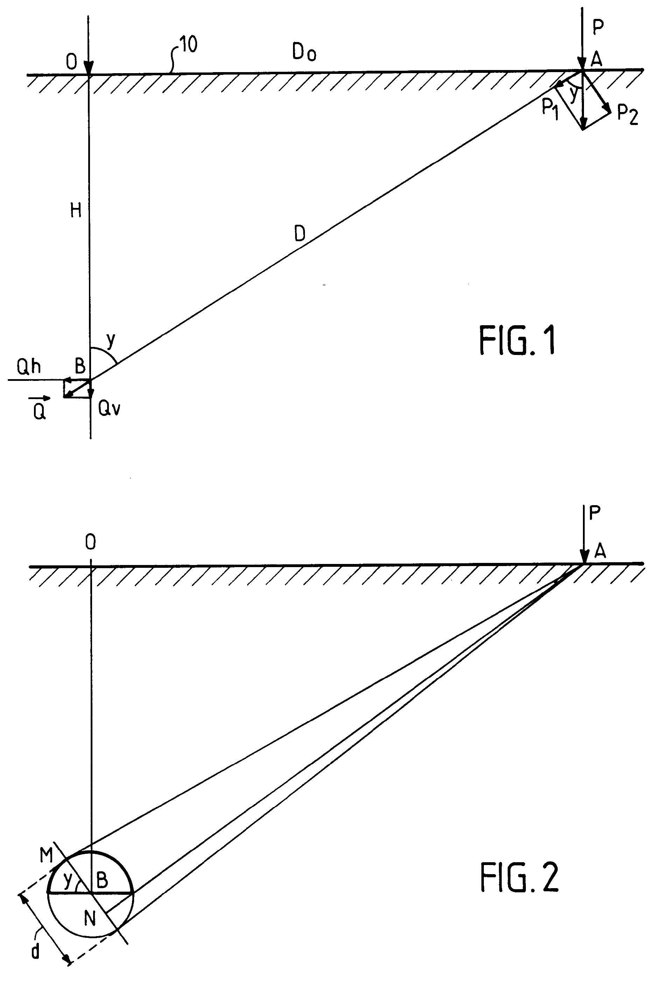

La figure 1 représente la surface d'un sol 10 et une pression P appliquée en un point A. Un problème est de connaître la force qui en résulte en un point B situé à une distance D du point A et à une profondeur H à l'aplomb du point O situé à la surface du sol. La pression P appliquée en A va avoir une composante active P1 dans la direction de A vers B. Cette composante P1 sera transmise par le sol sur la distance D et apparaitra affaiblie au point B selon la pression Q. Celle-ci a une composante verticale $Q_v$ et une composante horizontale $Q_h$.

On suppose que la section du câble se confond avec le point B. En appelant y l'angle OBA on peut écrire, en première approximation $Q = k.P1/D^2$ où k est un coefficient d'affaiblissement soit :

$$Q = \frac{k.P.\cos y}{D^2} = \frac{k.P}{H^2} \cdot \cos^3 y$$

Lorsque la pression P est appliquée en O à l'aplomb du point B, la pression Q appliquée en B est appelée $Q_O$ soit $Q_O = k. P/H^2$.

En faisant référence à $Q_O$ on obtient pour une pression P appliquée sous un angle y quelconque :

la composante verticale : $Q_v = Q_O \cos^4 y$
la composante horizontale : $Q_h = Q_O \cos^3 y \cdot \sin y$.

Lorsque ces conposantes $Q_v$, $Q_h$ sont appliquées sur des surfaces respectivement horizontale $S_h$ et

verticale $S_v$ on obtient les forces appliquées

$$(1) \quad F_v = S_h . Q_O . \cos^4 y$$
$$(2) \quad F_h = S_v . Q_O . \cos^3 y . \sin y.$$

Il est évident que pour des plaques de mêmes surfaces on a $F_h$ plus grand que $F_v$ pour y supérieur à 45° et l'inverse pour y inférieur à 45°. Donc si l'on veut privilégier la détection des forces appliquées assez loin de l'aplomb du câble les surfaces verticales réceptrices sont avantageuses. Néanmoins il faut détecter également les forces appliquées sensiblenent à l'aplomb du câble et donc conserver une capacité de détection de ces forces avec des surfaces horizontales. Ainsi selon l'invention on accroît les possibilités de détection pour les forces éloignées tout en n'abaissant pas trop les possibilités de détection des forces appliquées sensiblement à l'aplomb du câble.

Il est possible de se référer au brevet US 4 342 907 où un organe presseur formé de deux demicylindres rigides applique des forces de pression sur une fibre optique en la déformant. Mais ce capteur ne peut constituer un câble enroulable et déformable. La structure de son organe presseur n'est pas non plus optimisée pour détecter des forces appliquées très loin de l'aplomb du câble qui par définition ne parviennent à la fibre optique que très affaiblies. En s'écartant d'une telle structure, il est possible de calculer les forces appliquées en fonction de l'éloignement pour d'autres structures (figure 2). Si une pression P est appliquée au point A on peut en première approximation considérer que la portion du demi-cylindre supérieur de diamètre d interceptée par les composantes de forces issues de A sera équivalente à une plaque MN. On calcule aisément que MN vaut approximativenent 0,5.d(1 + cos y). Ce résultat ainsi que les équations 1 et 2 permettent pour une surface donnée d'organe presseur, d'obtenir, pour des cas simplifiés, les courbes je détectivité DC représentées en unités arbitraires sur la figure 3 en fonction de l'angle y.

La courbe 1 concerne une plaque horizontale placée au-dessus de la fibre optique du capteur (DC proportionnelle à cos y).

La courbe 2 concerne une plaque horizontale et une plaque verticale placées en alternance et ayant les mêmes longueurs (DC proportionnelle à 1/2 (cos y+sin y)).

La courbe 3 concerne le même cas que la courbe 2 mais avec une plaque verticale ayant une longueur double (DC proportionnelle à 1/3 (cos y+2 sin y)).

La courbe 4 concerne le même cas que la courbe 2 mais avec rune plaque verticale ayant une longueur triple (DC proportionnelle à 1/4 (cos y+3 sin y)).

La courbe 5 concerne un capteur dont l'élément supérieur à une forme de demi-cylindre.

On constate que pour accroître la sensibilité latérale du câble, des structures correspondant aux courbes 2, 3 et 4 sont particulièrement favorables car elles présentent un maximum pour des angles y assez élevés. Leurs sensibilités plus faibles pour des angles y faibles ne constituent pas un handicap car pour ces angles les forces à détecter sont beaucoup plus élevées et la détectivité globale du capteur est ainsi plus régulière.

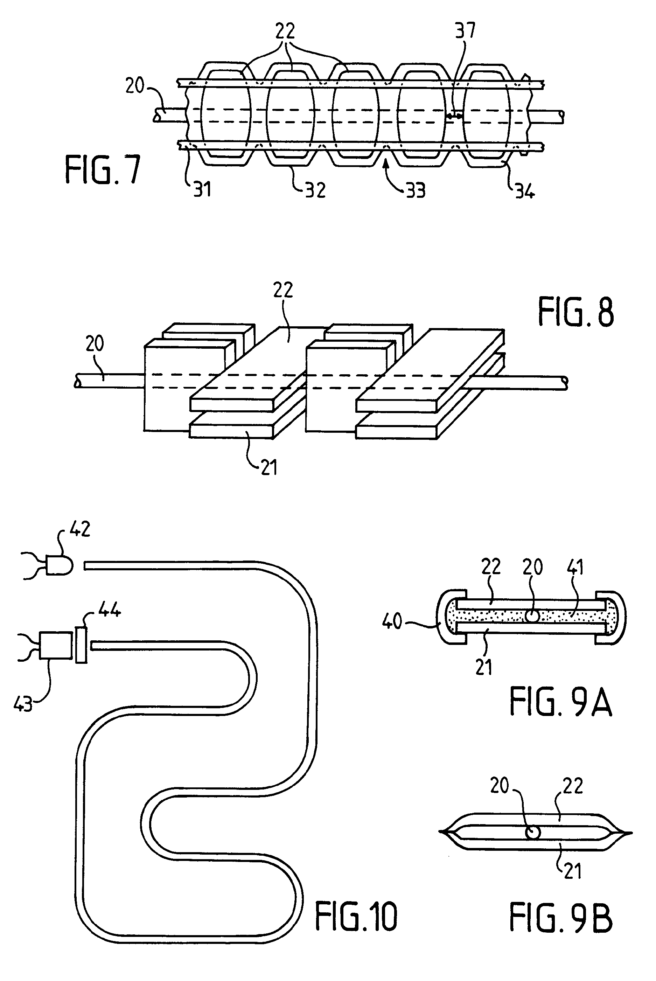

Ainsi selon que l'on cherche à privilégier la détectivité latérale ou au contraire à se satisfaire d'une détectivité latérale plus faible mais avec un câble moins onéreux, plus facile à réaliser et à placer par un personnel peu expérimenté, différents types de capteurs ayant une structure de câble sont mis en oeuvre dans l'invention. On distingue des câbles pour lesquels les structures d'amont et d'aval sont continues (figures 4A, 4B, 4C, 5, 6A, 6B), et d'autres pour lesquels elles sont discontinues (figures 7 et 8).

Les figures 4A, 4B, 4C concernent un câble qui privilégie les forces verticales. Il comprend une structure d'amont 22 et une structure d'aval 21 qui entourent la fibre optique 20. Ces structures sont constituées de feuilles continues semi-rigides pour transmettre les forces de pression et également assez souples pour être enroulables sur elles-mêmes dans le sens longitudinal XX'. Elles peuvent donc être enroulées sur des bobines. Ces feuilles peuvent être des plaques planes ou légèrement courbées. Dans une forme plus générale elles présentent des surfaces qui peuvent être non planes : on se réfère alors au plan osculateur à ladite surface.

Lors de son utilisation il est généralement nécessaire de disposer le câble en méandres et donc de le courber pour pouvoir par exemple contourner des obstacles et pour couvrir la surface maximale avec le maximum d'efficacité. Dans la mesure où une surface d'amont reste après la courbure une surface d'amont, cette courbure doit se faire sensiblement dans le plan de la plaque. Pour cela les structures d'amont et d'aval sont munies d'échancrures 23 destinées à permettre cette courbure. Dans ce cas les moyens de courbures sont constitués par des paires d'échancrures périphériques pratiquées sur les bords opposés de chaque feuille. Elles peuvent ne pas être en opposition sur chacune des deux structures.

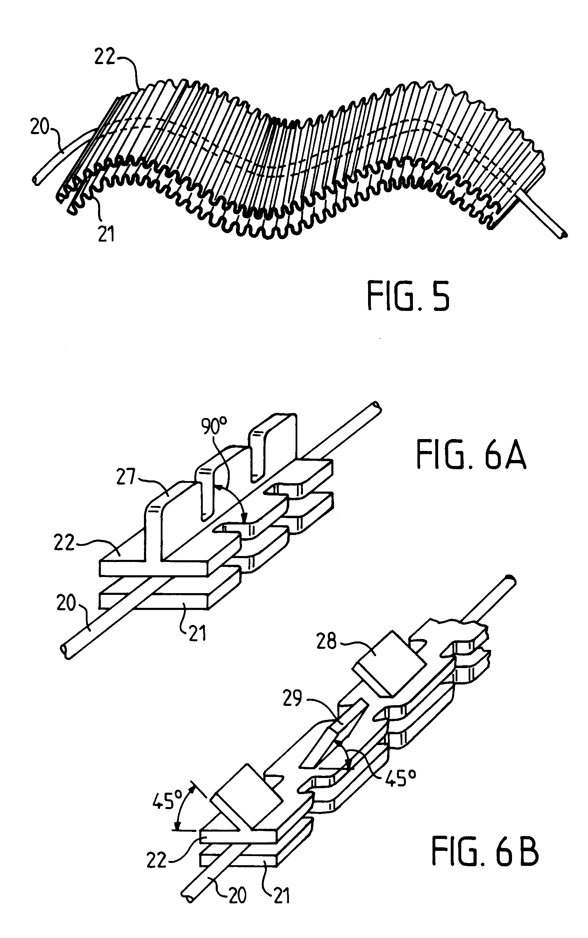

Une autre manière de permettre cette courbure est obtenue par le capteur représenté sur la figure 5. Dans ce cas les structures d'amont et d'aval sont pliées en accordéon. Comme précédemment elles peuvent présenter des échancrures.

Les figures 6A et 6B constituent deux capteurs pour lesquels la détectivité des forces latérales a été privilégiée. Dans ce cas la structure d'amont comporte en saillie des nervures centrales destinées à récupérer les composantes des forces de pression sensiblement parallèles au plan osculateur à la feuille. Il peut s'agir d'une suite de nervures centrales disposées chacune entre deux échancrures consécutives quelconque de la feuille de la structure d'amont. Les surfaces des nervures peuvent être sensiblement orthogonales à la surface de la feuille de la structure d'amont (figure 6A). Les nervures peuvent être alternativement orientées +45° et à -45° du plan osculateur à la feuille d'amont de la structure d'amont (figure 6B). Les forces interceptées par ces nervures sont transmises à la fibre optique à l'aide de la feuille 22. La structure d'amont est alors constituée de la feuille 22 et des nervures 27, 28, 29.

La figure 7 concerne un câble dont les structures d'amont et d'aval sont discontinues. Sur la figure 7 la structure d'amont 22 est seule représentée. Les structures sont organisées en tronçons suffisamment distants pour permettre l'enroulement longitudinal du câble et sa courbure dans le sens transversal. Il est possible de faire que la distance qui sépare les structures d'amont et d'aval de deux tronçons consécutifs dans le sens longitudinal du câble soit plus petite au centre (distance 37) que sur la périphérie du câble. La structure d'amont peut être une feuille, une latte ou un demi-cylindre rigides ou semi-rigides et la structure d'aval peut être une feuille ou une latte rigides ou semi-rigides. Les feuilles ou les lattes de la structure d'amont d'une part et de la structure d'aval d'autre part peuvent être réunies entre elles par des lanières souples 31 éventuellement légèrement extensibles elles-mêmes noyées dans un enrobage souple 34 qui peut présenter des échancrures 33.

La figure 8 représente un capteur dont l'organe presseur est constitué de tronçons dont les structures d'amont successives détectent alternativement les composantes des forces de pression agissant dans des directions sensiblement orthogonales. Chaque tronçon est constitué par exemple de deux plaques formant les structures d'amont et d'aval, ces plaques étant alternativement placées horizontalement et verticalement. Lors de la pose du câble sur le sol il est possible de le placer de telle sorte que chaque couple de plaques se trouve sensiblement à 45° par rapport à la verticale. Chaque tronçon est suffisamment distant du précédent pour permettre d'enrouler et de courber le câble. L'ensemble peut être noyé dans un enrobage souple qui solidarise les tronçons.

Les figures 9A et 9B concernent la solidarisation des structures d'amont et d'aval. La figure 9A représente une bande de serrage 40 qui serre les structures d'amont 22 et d'aval 21 sur leur périphérie. Cette bande peut être fixée par forçage, sertissage, soudage ... ou tout autre moyen de fixation. La figure 9B indique un autre moyen de solidarisation qui peut consister à pincer ou à sertir les structures 22 et 21 elles-même sur leur périphérie. Ainsi les structures d'amont et d'aval sont solidarisées entre elles soit à l'aide d'une bande de serrage périphérique soit par pincement, par sertissage ou par soudure des bords latéraux.

Dans tous les exemples cités les structures d'amont et d'aval peuvent être noyées dans un enrobage souple 34, 41 qui les solidarise et peut assurer l'étanchéité du câble. Cet enrobage souple ne doit pas atténuer la transmission des forces vers la fibre optique. La solidarisation des deux plaques peut éventuellement se faire par l'enrobage souple 41 sans utilisation de bandes de serrage.

Le câble qui a été décrit selon plusieurs modes de réalisation est représenté avec une fibre optique centrale. Il est bien évidemment possible de placer plusieurs fibres optiques entre les structures d'amont et d'aval ce qui accroît la détectivité du câble. Dans ce cas lorsqu'une certaine longueur de câble est utilisée, les deux fibres optiques sont tout d'abord sectionnées à la longueur désirée puis elles sont raccordées l'une avec l'autre pour assurer la continuité optique. Ce raccordement est effectué selon les techniques, connues de l'homme du métier.

La figure 10 représente un exemple d'un schéma de placement d'un câble selon l'invention. Il est disposé en méandres pour couvrir une surface donnée du sol. Un émetteur de lumière 42 (par exemple un laser à lumière polarisée) est placé à une extrémité, et la lumière transmise par le câble est détectée à travers un polariseur 44 par un détecteur 43 relié à des circuits électroniques de détection. Ces circuits mesurent par exemple la variation de l'état de polarisation induite dans la fibre optique par sa photoélasticité. La distance qui sépare deux parties du câble est par exemple de 0,20 à 1m. Les plaques sont par exemple des feuilles d'acier de quelques centimètres de large (1 à 10 cm par exemple) et de quelques dizièmes de millimètres d'épaisseur (0,2 à 0,4 mm par exemple). D'autres matériaux tels que les alliages de cuivre (par exemple : le CHRYSOCAL), des plastiques durs, des matériaux composites, etc ... conviennent également. La fibre optique est par exemple constituée d'un verre de coeur de 10 micromètres entouré d'un verre d'enrobage de 125 micromètres muni d'un enrobage plastique de protection conduisant à un diamètre extérieur de 250 micromètres environ.

## Revendications

1. Capteur de pression à fibre optique formant un câble, la fibre optique (20) étant soumise à une action d'un organe presseur (21, 22) qui subit des forces de pression, l'organe presseur présentant une structure répétitive longitudinalement permettant au câble de pouvoir être enroulé sur lui-même autour d'un axe de rotation, et, lorsqu'il est déroulé de pouvoir être courbé dans une direction sensiblement parallèle à cet axe de rotation caractérisé en ce que l'organe presseur (21, 22) est constitué d'une structure d'amont (22) et d'une structure d'aval (21), rigides ou semi-rigides, placées de part et d'autre de la fibre optique (20) relativement aux forces de pression appliquées, la structure d'amont (22) ayant une largeur d'au moins 1 cm pour récupérer le mieux possible les composantes de force de pression appliquées à l'écart de l'aplomb du câble.

2. Capteur selon la revendication 1, caractérisé en ce que les structures d'amont et d'aval sont constituées de deux feuilles continues semi-rigides qui sont munies de moyens de courbure pour que lesdites feuilles puissent être courbées en des zones quelconques de leurs longueurs, dans le plan osculateur à chaque feuille en chaque zone.

3. Capteur selon la revendication 2, caractérisé en ce que les moyens de courbure sont constitués par un pliage en accordéon desdites feuilles.

4. Capteur selon la revendication 2, caractérisé en ce que les moyens de courbure sont constitués par des paires d'échancrure périphériques pratiquées sur les bords opposés de chaque feuille.

5. Capteur selon la revendication 4, caractérisé en ce que la structure d'amont comporte en saillie au moins une nervure centrale destinée à récupérer les composantes des forces de pression sensiblement parallèles au plan osculateur à la feuille.

6. Capteur selon la revendication 5, caractérisé en ce que la structure d'amont comporte une suite de nervures centrales disposées chacune entre deux échancrures consécutives quelconques de la feuille de la structure d'amont.

7. Capteur selon la revendication 6, caractérisé en ce que la surface des nervures est sensiblement orthogonale à la surface de la feuille de la structure d'amont.

8. Capteur selon la revendication 6, caractérisé en ce que les nervures sont alternativement orientées à +45° et à -45° du plan osculateur à la feuille d'amont de la structure d'amont.

9. Capteur selon la revendication 1, caractérisé en ce que les structures d'amont et d'aval de l'organe presseur sont organisées en tronçons suffisamment distants pour permettre l'enroulement du câble d'une part et d'autre part sa courbure dans le sens transversal.

10. Capteur selon la revendication 9, caractérisé en ce que les tronçons sont identiques et pour pouvoir courber le câble, la distance qui sépare les structures d'amont d'une part, et d'aval d'autre part de deux tronçons consécutifs, dans le sens longitudinal du câble, est plus petite au centre que sur la périphérie du câble.

11. Capteur selon la revendication 9, caractérisé en ce que l'organe presseur est constitué de tronçons dont les structures d'amont successives détectent alternativement les composantes des forces de pression agissant dans des directions sensiblement orthogonales.

12. Capteur selon les revendications 10 à 11, caractérisé en ce que la structure d'amont est une feuille, une latte ou un demi-cylindre rigide ou semi-rigide et la structure d'aval est une feuille ou une latte rigide ou semi-rigide.

13. Capteur selon la revendication 12, caractérisé en ce que les feuilles ou les lattes de la structure d'amont d'une part et de la structure d'aval d'autre part sont réunies entre elles par des lanières souples.

14. Capteur selon une des revendications 1 à 13, caractérisé en ce que les structures d'amont et d'aval sont noyées dans un enrobage souple pour les maintenir en position autour de la fibre optique.

15. Capteur selon une des revendications 1 à 14, caractérisé en ce que les structures d'amont et d'aval sont solidarisées entre elles soit à l'aide d'une bande de serrage périphérique soit par pincement, par sertissage ou par soudure des bords latéraux soit par un enrobage souple.

**Patentansprüche**

1. Faseroptischer Drucksensor in der Ausführung als Kabel, wobei die optische Faser (20) die Wirkung einer Druckeinheit (21, 22) erfährt, die Druckkräfte ausübt und eine sich wiederholende Längsstruktur aufweist, die es ermöglicht, das Kabel um eine Rotationsachse aufzuwickeln, und das Kabel in der abgewickelten Zustand in einer im wesentlichen parallel zu dieser Rotationsachse verlaufenden Richtung auszubiegen, dadurch gekennzeichnet, daß die Druckeinheit (21, 22) aus einer steifen oder halbsteifen Stromaufwärts- (22) und Stromabwärtsstruktur (21) besteht, und diese Strukturen an beiden Seiten der optischen Faser (20) in bezug auf die ausgeübten Druckkräfte angeordnet sind, wobei die Stromaufwärtsstruktur (22) eine Gröbe von wenigstens 1 cm zum möglichst guten Wiedergewinnen der Komponenten der ausgeübten Druckkräfte seitlich der Senkrechten des Kabels besitzt.

2. Drucksensor nach Anspruch 1, dadurch gekennzeichnet, daß die Stromaufwärts- und Stromabwärtsstrukturen aus zwei durchgehenden halbsteifen Folien bestehen, die mit Krümmungsmitteln zur Ermöglichung der Krümmung dieser Folien in beliebigen Zonen ihrer Längen in der Schmiegeebene jeder Folie in jeder Zone versehen sind.

3. Drucksensor nach Anspruch 2,
   dadurch gekennzeichnet, daß die Krümmungsmittel aus einer wellenförmigen Faltung dieser Folien bestehen.

4. Drucksensor nach Anspruch 2,
   dadurch gekennzeichnet, daß die Krümmungsmittel aus Ausschnittspaaren auf den einander gegenüberliegenden Rändem jeder Folie bestehen.

5. Drucksensor nach Anspruch 4,
   dadurch gekennzeichnet, daß die Stromaufwärtsstruktur vorspringend wenigstens eine zentrale Rippe zum Wiedergewinnen der Komponenten der im wesentlichen parallel zur Schmiegeebene der Folie verlaufenden Druckkräfte enthält.

6. Drucksensor nach Anspruch 5,
   dadurch gekennzeichnet, daß die Stromaufwärtsstruktur eine Folge zentraler Rippen enthält, die je zwischen aufeinanderfolgenden beliebigen Ausschnitten der Folie der Stromaufwärtsstruktur angeordnet sind.

7. Drucksensor nach Anspruch 6,
   dadurch gekennzeichnet, daß die Rippenflächen im wesentlichen orthogonal zur Oberfläche der Folie der Stromaufwärtsstruktur verläufen.

8. Drucksensor nach Anspruch 6,
   dadurch gekennzeichnet, daß die Rippen abwechselnd unter +45° und unter -45° der Schmiegeebene der Stromaufwärtsfolie der Stromaufwärtsstruktur orientiert sind.

9. Drucksensor nach Anspruch 1,
   dadurch gekennzeichnet, daß die Stromaufwärts- und Stromabwärtsstrukturen des Druckelements in Abschnitten organisiert sind, die weit genug auseinander liegen, um das Aufwickeln des Kabels einerseits und das Ausbiegen des Kabels in der transversalen Richtung andererseits zu ermöglichen.

10. Drucksensor nach Anspruch 9,
    dadurch gekennzeichnet, daß die Abschnitte identisch sind und daß, um das Krümmen des Kabels zu ermöglichen, der Abstand, die die Stromaufwärtsstrukturen einerseits und die Stromabwärtsstrukturen andererseits von zwei aufeinanderfolgenden Abschnitten in der Längsrichtung des Kabels voneinander trennt, in der Mitte kleiner ist als am Umfang des Kabels.

11. Drucksensor nach Anspruch 9,
    dadurch gekennzeichnet, daß das Druckelement aus Abschnitte besteht, deren aufeinanderfolgende Stromaufwärtsstrukturen abwechselnd die Komponenten der Druckkräfte detektieren, die in die im wesentlichen orthogonalen Richtungen wirken.

12. Drucksensor nach Anspruch 10 und 11,
    dadurch gekennzeichnet, daß die Stromaufwärtsstruktur eine Folie, ein Streifen oder ein steifer oder halbsteifer Halbzylinder ist, und die Stromabwärtsstruktur eine Folie oder ein steifer oder halbsteifer Streifen ist.

13. Drucksensor nach Anspruch 12,
    dadurch gekennzeichnet, daß die Folien oder die Streifen der Stromaufwärtsstruktur einerseits und der Stromabwärtsstruktur andererseits miteinander über flexible Fäden miteinander zusammengefügt sind.

14. Drucksensor nach einem oder mehreren der Ansprüche 1 bis 13, dadurch gekennzeichnet, daß die Stromaufwärts- und Stromabwärtsstrukturen in eine flexible Hülle eingebettet sind, um sie um die optische Faser herum an ihrem Platz zu behalten.

15. Drucksensor nach einem oder mehreren der Ansprüche 1 bis 14, dadurch gekennzeichnet, daß die Stromaufwärts- und Stromabwärtsstrukturen mit Hilfe eines Klemmbandes am Umfang entweder durch Aufklemmen, Abwinkeln oder Weichlöten der lateralen Ränder oder durch eine flexible Hülle mit einander verbunden sind.

**Claims**

1. A fibre-optical pressure sensor forming a cable, the optical fibre (20) being exposed to the influence of a pressure member (21,22) on which pressure forces act, the pressure member having a repetitive structure in the longitudinal direction, enabling the cable to be wound onto itself around an axis of rotation and, when it is unwound, to be bent in a direction substantially parallel to said axis of rotation, characterized in that the pressure member (21,22) is formed by an upstream structure (22) and a downstream structure (21), being rigid or semi-rigid structures which are arranged to both sides of the optical fibre (20) relative to the pressure forces applied, the upstream structure (22) having a with of at least 1 cm in order to capture as well as possible the components of the pressure forces which are not applied directly above the cable.

2. A sensor as claimed in Claim 1, characterized in that the upstream and downstream structures are formed by two semi-rigid continuous sheets which are provided with bending means so that said sheets can be bent in arbitrary zones along their length in the osculating plane to each sheet in each zone.

3. A sensor as claimed in Claim 2, characterized in that the bending means are formed by folding said sheets in an accordion-like fashion.

4. A sensor as claimed in Claim 2, characterized in that the bending means are formed by pairs of peripheral notches formed at the opposite sides of each sheet.

5. A sensor as claimed in Claim 4, characterized in that the upstream structure comprises at least one projecting central rib which serves to capture the pressure components extending substantially parallel to the osculating plane to the sheet.

6. A sensor as claimed in Claim 5, characterized in that the upstream structure comprises a succession of central ribs, each of which is situated between two arbitrary consecutive notches of the sheet of the upstream structure.

7. A sensor as claimed in Claim 6, characterized in that the surface of the ribs is substantially orthogonal to the surface of the sheet of the upstream structure.

8. A sensor as claimed in Claim 6, characterized in that the ribs are alternately oriented to enclose an angle of +45° and -45° with respect to the osculating plane to the sheet of the upstream structure.

9. A sensor as claimed in Claim 1, characterized in that the upstream and downstream structures of the pressure member are segmented, the segments being spaced apart far enough to enable the winding of the cable and its bending in the transverse direction.

10. A sensor as claimed in Claim 9, characterized in that the segments are identical and that for the bending of the cable the distance which separates the upstream structure on the one side and the downstream structure on the other side of two consecutive segments, viewed in the longitudinal direction of the cable, is smaller at the centre than at the periphery of the cable.

11. A sensor as claimed in Claim 9, characterized in that the pressure member is formed by segments whose successive upstream and downstream structures alternately detect the pressure components acting in substantially orthogonal directions.

12. A sensor as claimed in the Claims 10 to 11, characterized in that the upstream structure is formed by a sheet, a strip or a rigid or semi-rigid half-cylinder, the downstream structure being formed by a sheet or a rigid or semi-rigid strip.

13. A sensor as claimed in Claim 12, characterized in that the sheets or the strip of the upstream structure on the one side and the downstream structure on the other side are interconnected by way of flexible strips.

14. A sensor as claimed in any one of the Claims 1 to 13, characterized in that the upstream and downstream structures are accommodated in a flexible envelope in order to keep these structures in position around the optical fibre.

15. A sensor as claimed in any one of the Claims 1 to 14, characterized in that the upstream and downstream structures are interconnected either by means of a peripheral clamping band or by the pinching, folding or soldering of the lateral edges, or by means of a flexible envelope.

FIG.1

FIG.2

FIG. 3

FIG. 4A

FIG. 4C

FIG. 4B

FIG. 5

FIG. 6A

FIG. 6 B

FIG.7

FIG.8

FIG.9A

FIG.10

FIG.9B